Europäisches Patentamt

European Patent Office

Office européen des brevets

(11) Veröffentlichungsnummer: **0 611 708 A1**

# EUROPÄISCHE PATENTANMELDUNG

(21) Anmeldenummer: **94101550.5**

(22) Anmeldetag: **02.02.94**

(51) Int. Cl.⁵: **B65G 1/14**

(30) Priorität: **15.02.93 DE 9302139 U**
**14.04.93 DE 4312214**

(43) Veröffentlichungstag der Anmeldung:
**24.08.94 Patentblatt 94/34**

(84) Benannte Vertragsstaaten:
**DE ES FR GB IT SE**

(71) Anmelder: **Croon & Lucke Maschinenfabrik GmbH**
**Flachstrasse 14**
**D-88512 Mengen (DE)**

(72) Erfinder: **Schoeller, Heinz**
**Unter dem Staffel 22**
**D-78239 Rielasingen/Worblingen (DE)**

(74) Vertreter: **Weiss, Peter, Dr. rer.nat.**
**Dr. Peter Weiss & Partner**
**Postfach 12 50**
**D-78229 Engen (DE)**

(54) **Lagergestell.**

(57) Bei einem Lagergestell (R) zur Aufnahme von Werkstücken (5) mit im Abstand zueinander angeordneten Stapelsäulen (2), welche Auflager 84) zum Halten der Werkstücke (5) aufweisen, sollen die Stapelsäulen (2) um ihre Längsachsen (A) drehbar angeordnet sind. Ferner sind die Auflager (4) an jeder Stapelsäule (2) in vertikaler und horizontaler Richtung versetzt zueinander angeordnet.

Fig.1

Die Erfindung betrifft ein Lagergestell zur Aufnahme von Werkstücken mit im Abstand zueinander angeordneten Stapelsäulen, welche Auflager zum Halten der Werkstücke aufweisen.

Derartige Lagergestelle dienen vor allem in der Automobilindustrie der Lagerung von flachen Teilen eines Automobils, nachdem diese Teile aus einer Presse od. dgl. Formstation kommen und bevor diese Teile weiter be- bzw. verarbeitet werden. Ein derartiges Lagergestell ist beispielsweise in der DE-OS 38 11 310 oder auch in dem Deutschen Gebrauchsmuster 92 03 901.4 beschrieben. In beiden Fällen sind voneinander beabstandete Stapelsäulen vorgesehen, in oder an denen sich Klinken befinden, die ein Halten der Werkstücke innerhalb des Lagergestells gewährleisten. Dabei wird das Werkstück beispielsweise von einem Roboter der Presse entnommen und in das entsprechende Lagergestell mit den Stapelsäulen eingeführt. Beim Erreichen seiner Endlage auf den entsprechenden Klinken wird bewirkt, daß eine nächste Klinkenreihe in eine Aufnahmeposition gelangt.

Diese Lagergestelle haben sich in vielfältiger weise bewährt, besitzen jedoch einen Nachteil. Dadurch, daß der Roboter das Werkstück in das Lagergestell und dort in unterschiedlichen Höhen einbringen muß, benötigt dieser Roboter relativ viel Zeit, bevor er das nächste Werkstück aus der Presse entsorgen kann. Im Klartext bedeutet dies, daß die Presse schneller arbeitet als der Roboter und somit von der Geschwindigkeit des Roboters abhängig ist.

Der vorliegenden Erfindung liegt die Aufgabe zugrunde, ein Lagergestell der o.g. Art zu entwickeln, bei welchem dieser Nachteil beseitigt ist.

Zur Lösung dieser Aufgabe führt, daß die Stapelsäulen um ihre Längsachsen drehbar angeordnet sind.

Diese Erfindung ermöglicht es, daß ein Werkstück von einem Roboter immer an der gleichen Stelle des Lagergestells abgelegt werden kann, dann jedoch durch das Drehen der Stapelsäulen an eine andere Stelle innerhalb des Lagergestells verfrachtet wird. Somit ist es möglich, daß der Roboter immer exakt die gleiche Bewegung durchzuführen hat und nicht unterschiedlich tief in das Lagergestell eindringen muß. Dadurch wird soviel Zeit gespart, daß nunmehr der Roboter schneller arbeiten kann, als die Presse. Dies ermöglicht, daß die volle Leistung der Presse ausgenutzt werden kann.

Für die Auflager an den Stapelsäulen sind viele Variationen denkbar und sollen vom Erfindungsgedanken mitumfaßt werden. Beispielsweise können die Auflager eine Schneckenform aufweisen bzw. in einer Helix ageordnet sein, wobei durch eine fortlaufende Drehung der Stapelsäule die Werkstücke von oben nach unten wandern. Dies ließe sogar ein Verfrachten der Werkstücke in einem Lagergestell mit horizontal angeordneten Stapelsäulen zu. Allerdings befinden sich dabei die Werkstücke fast durchgehend in Anlage an den Auflagern, so daß es hier zu Schleifspuren od. dgl. kommen könnte. Ferner ist auch der getriebemäßige und motorische Aufwand erhöht.

In einem bevorzugten Ausführungsbeispiel der Erfindung sind die Auflager in vertikaler und horizontaler Richtung versetzt zueinander angeordnet. Hierbei empfiehlt es sich, die Auflager in vertikalen Reihen an den Stapelsäulen anzuordnen. Jedoch soll auch eine andere Anordnung vom Erfindungsgedanken umfaßt sein, je nach dem, wie die handwerkliche Ausgestaltung dieses Lagergestells ist.

In einem einfachen Ausführungsbeispiel genügen zwei vertikale Reihen von Auflagern an jeder Stapelsäule. Diese Auflager der einen Reihe sind versetzt zu den Auflagern der anderen Reihe angeordnet. Werden die Stapelsäulen gedreht, so fallen die Werkstücke von einem Auflager auf das nächst untere Auflager der anderen vertikalen Reihe.

Damit das Werkstück zum Fallen freigegeben wird, muß das Auflager um einen bestimmten Winkel gedreht werden, der unter anderem auch von der Länge des Auflagers abhängt. In jedem Fall genügt ein Winkel von etwa 90°, so daß die beiden vertikalen Reihen in einem horizontalen Winkel von etwa 90° zueinander versetzt angeordnet sein können. Es ist jedoch auch ein anderer Winkel, und zwar sowohl ein geringerer als auch ein größerer, denkbar. Dies hängt vor allem auch davon ab, ob die Stapelsäulen eine kontinurlierliche Drehbewegung oder eine hin- und hergehende Drehbewegung vollziehen. Bei der hin- und hergehenden Drehbewegung bietet sich die Anordnung von nur zwei vertikalen Reihen an, die jedoch horizontal einen Winkel von kleiner als 180° einschließen. Bei einer kontinuierlichen Drehbewegung der Stapelsäule kann der horizontale Winkel von einer Mehrzahl von vertikalen Reihen auch geringer als 90° sein, so daß das Werkstück in wesentlich kleineren Stufen nach unten fällt. Allerdings benötigt es dann einer Mehrzahl von Auflagern.

Die Auflager selbst können fest mit der Stapelsäule verbunden sein. Beispielsweise ist es möglich, die Auflager beim Herstellen der Stapelsäule selbst dieser Stapelsäule anzuformen. Es ist auch möglich, die Auflager in die Stapelsäule einzuschrauben, mit ihr zu verschweißen, zu verkleben oder sonstwie zu verbinden.

Da jedoch auch daran gedacht ist, die Werkstücke wieder durch einen Roboter aus dem Lagergestell entnehmen zu können, kann es sich anbieten, die Auflager kippbar zu gestalten. Sie sollten von einer etwa horizontalen Haltelage soweit in vertikaler Richtung kippbar sein, daß ein Werkstück an ihnen nach oben vorbeigleiten kann.

Falls es sich bei den Werkstücken um empfindliche Werkstücke handelt, ist daran gedacht, die Auflager mit einem Polster zu belegen oder mit einem Verschleißschutz zu überziehen. Ferner können auch in den Auflagern Rollen, Kugeln od. dgl. integriert sein, welche beim Drehen der Stapelsäule die Unterfläche des Werkstückes abrollen. Auch hierdurch wird eine Beschädigung der Werkstücke vermieden.

In einem bevorzugten Ausführungsbeispiel ist jede Stapelsäule von einem Schutzprofil umgeben, wie dies beispielsweise im Deutschen Gebrauchsmuster 92 03 901.4 dargestellt ist. Dies hat unter anderem auch den Vorteil, daß ein Teil des Schutzprofils selbst ohne zusätzliche Profile als Anschlagleisten für die Werkstücke dienen können. Durch die Bewegung der Auflager ist es nicht ausgeschlossen, daß das Werkstück horizontal innerhalb des Lagergestells hin- und hergeschoben wird. Eine derartige Bewegung wird entweder durch eine entsprechende Verlängerung des Schutzprofils oder aber durch separate Profile bzw. Vertikalstreifen an den Schutzprofilen verhindert. Sind keine Schutzprofile vorgesehen, so müßten in der Regel separate Anschläge für die Werkstücke vorgesehen werden.

Im Einzelfall ist es auch denkbar, daß die Stapelsäulen an oder in einem entsprechenden Schutzprofil verstellbar angeordnet sind. Dies geschieht auf ähnliche Weise, wie in dem Deutschen Gebrauchsmuster 92 03 901.4 beschreiben. Lediglich die Drehbarkeit der Stapelsäule muß gewährleistet bleiben. Beispielsweise ist denkbar, daß ein Wellenstummel der Stapelsäule in eine obere waagrechte Deckplatte eingreift, welche das Schutzprofil nach oben abdeckt. In diese Deckplatte kann ein Langloch angeordnet sein, in welchem der Wellenstummel in beschränktem Umfange verschiebbar und festlegbar geführt ist, so daß die Stapelsäule in einem gewünschen Umfang gekippt werden kann.

Die Drehung der Stapelsäulen kann auf beliebige Art und Weise geschehen. Ein entsprechender Antrieb kann manuell, motorisch, hydraulisch, pneumatisch od. dgl. erfolgen. Je nach dem, ob eine kontinuierliche Drehbewegung der Stapelsäulen in eine Richtung oder eine hin- und hergehende Bewegung vollzogen werden soll, bietet sich auch der eine oder andere Antrieb als geeignet an. Bei einer kontinuierlichen Drehung ist beispielsweise die Anordnung eines Elektromotors denkbar. Für die hin- und hergehende Bewegung bieten sich eher Pneumatik- oder Hydraulikyzlinder an.

Bei einer kontinuierlichen Drehung der Stapelsäulen ist die Geschwindigkeit der Geschwindigkeit des Roboters angepaßt, so daß in jedem Fall die obersten Auflager immer zum richtigen Zeitpunkt frei sind. Bei einer taktweisen Drehung, die hin- und hergehend sein kann oder aber auch nur in einer Richtung erfolgt, kann beispielsweise vom Roboter bei dessen Bewegung ein Impuls ausgelöst werden, der diese Bewegung initiiert.

Ferner sollten in der Regel alle Stapelsäulen eines Lagergestellts eine gleichförmige Drehbewegung vollziehen. Nur dann scheint gewährleistet, daß tatsächlich das Werkstück von den einen Auflagern freigegeben und von anderen aufgefangen wird. Es ist nun denkbar, daß jede Stapelsäule einen eigenen Antrieb aufweist, die bevorzugt miteinander auf mechanischem oder elektrischem Wege gekoppelt sind. In der Regel dürfte aber ein einziger Antrieb genügen, wobei dann die anderen Stapelsäulen mit der angetriebenen Stapelsäule über entsprechende Kupplungselemente verbunden sind. Als Kupplungselement ist dabei beispielsweise eine Kette denkbar, welche entsprechende Zahnräder an den Stapelsäulen umschlingt. Allerdings muß eine derartige Kette gewartet und nachgespannt werden. Deswegen sollen die einzelnen Stapelsäulen durch andere Verbindungselemente, wie beispielsweise Verbindungsstangen miteinander gekoppelt werden. Die Kopplung geschieht so, daß über die Verbindungsstangen zwangsläufig die Drehbewegung einer Stapelsäule auch auf alle anderen übertragen wird. Für den Transport des Lagergestells bietet es sich an, daß die Stapelsäulen auf einer Grundplatte angeordnet sind. Ebenfalls für den Transport sollten die Stapelsäulen fixiert werden können, damit nicht durch ein unbeabsichtigtes Drehen ein dann nicht mehr gewünschtes Verfrachten der Werkstücke innerhalb des Lagergestells geschieht.

Sobald das Lagergestell sich am gewünschten Ort befindet, kann es entladen werden. Beim Entladen spielt die Geschwindigkeit keine Rolle, so daß hier entweder die Werkstücke von einem Roboter nach oben auf dem Lagergestell oder aber seitlich entnommen werden können.

In vielen Fällen wird auch ein Transport und/oder eine Lagerung der Werkstücke in vertikaler Lage gewünscht. Zu diesem Zweck ist es möglich, das Lagergestell um 90° seitlich zu kippen, so daß die Werkstücke in dieser Lage transportiert und leichter entnommen werden können. Die heutigen Gabelstapler sind zu einer solchen Drehung in der Lage. In diesem Fall sind die Auflager nach dem Befüllen des Lagergestells und vor dem Entleeren gesperrt, so daß die Werkstücke zwischen ihnen gehalten werden.

Sind die Auflager als Schrauben ausgebildet, so können die Lagergestelle sogar mit vertikal angeordneten und in dieser Position vom Roboter gebrachten Werkstücken gefüllt werden.

Sobald das Lagergestell geleert ist, sollte es wieder zur Befüllstation zurückgelangen. Damit es wieder gegenüber dem Befüllroboter bzw. gegenüber der Presse ausgerichtet ist, kann eine Zentrierplatte vorgesehen werden, die entsprechende Zentrierstifte für die Grundplatte aufweist. Ein weiterer Vorteil dieser Anordnung ist, daß nicht jedes Lagergestell seinen eigenen Antrieb aufweisen muß, sondern daß der Zentrierplatte ein Antrieb zugeordnet ist, der eine lösbare Verbindung mit zumindest einer Stapelsäule besitzt. Beispielsweise kann dieser Antrieb ein Hydraulikzylinder sein, der über eine Kolbenstange einen Schieber betätigt. Dieser Schieber besitzt der Einfachheit halber eine Ausnehmung, in die ein Hebel eingesetzt werden kann, wobei dieser Hebel andererseits fest mit einer Stapelsäule verbunden ist. Auch hier sind jedoch viele Abwandlungen denkbar, die vom Erfindungsgedanken umfaßt werden sollen.

Die Stapelsäulen selbst können im übrigen querschnittlich unterschiedlichste Formen aufweisen. Sie können rund oder mehreckig sein. In der Praxis hat sich gezeigt, daß vor allem eine querschnittlich viereckige Stapelsäule bevorzugt wird, da sie eine gewisse Führungskante für das Werkstück darstellt.

Des weiteren ist vorgesehen, daß nicht nur vier Säulen innerhalb eines Lagergestells angeordnet sind. Es können auch sechs oder mehr Säulen vorgesehen sein, wobei sechs Säulen sich dann anbieten, wenn sehr große Teile gelagert werden sollen. Mehr Säulen bieten sich an, wenn mehrere Teile nebeneinander gelagert werden sollen.

In einer bevorzugten Ausführungsform der Erfindung soll den Stapelsäulen noch eine Entladeeinrichtung zugeordnet sein. Ein Vorteil der vorliegenden Erfindung ist darin zu sehen, daß sich die Bedienperson beim Beladen von Hand sofern dies stattfindet, nicht mehr bücken muß. Dies gilt aber nicht für die Personen, welche das Lagergestell entladen. Diese müssen sich bücken und zwar umso tiefer, je tiefer auch das zu entladende Werkstück liegt. Dieser Nachteil wird durch eine Entladeeinrichtung beseitig, die beispielswiese der Einfachheit halber aus einer Ablage bestehen kann, welche unter das unterste Werkstück führbar ist. Werden nun die Stapelsäulen gedreht, so fällt das unterste Werkstück auf die Ablage und kann mit der Ablage aus dem Lagergestell gezogen werden. Auf diese Weise ist eine einfache Entlademöglichkeit gegeben.

Ein weiterer Vorteil der Entladeeinrichtung ist, daß die Auflager in keinem Fall mehr schwenkbar ausgebildet sein müssen. Damit werden ganz erhebliche Herstellungskosten eingespart. Ferner können die Auflager im vertikalen Abstand viel näher aneinander angeordnet werden, so daß ein bekanntes Lagergestell mit etwa doppelt soviel Werkstücken bestückt werden kann. Ferner befinden sich dann am Lagergestell auch wesentlich weniger mechanische Teile, welche gewartet werden müssen, bzw. verschleißen können.

Der Entladeeinrichtung sollte ein Antrieb zugeordnet sein, dessen Ausgestaltung ebenfalls beliebig ist. Er muß lediglich bewirken, daß die Entladeeinrichtung zwischen die Stapelsäulen eingeschoben und wieder zurückgeholt werden kann. Vom Erfindungsgedanken werden alle möglichen Antriebe umfaßt. Ähnliches gilt auch für die Führung der Entladeeinrichtung, die beispielsweise mittels Schienen in entsprechenden Führungen erfolgt.

Der Antrieb sollte allerdings mit dem Antrieb 15 gekoppelt sein, so daß der Antrieb 15 erst dann tätig wird, wenn sich die Ablage unter dem untersten Werkstück befindet.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 eine perspektivische Ansicht eines erfindungsgemäßen Lagergestells;

Figur 2 eine perspektivische Ansicht eines weiteren Ausführungsbeispiels eines erfindungsgemäßen Lagergestells;

Figur 3 ein weiteres Ausführungsbeispiel eines erfindungsgemäßen Lagergestells im Aufriß;

Figur 4 eine Draufsicht auf das Lagergestell gemäß Figur 3;

Figur 5 eine Draufsicht auf eine Zentrierplatte für ein Lagergestell mit einem Antrieb;

Figur 6 eine perspektivische Ansicht eines weiteren Ausführungsbeispiels eines erfindungsgemäßen Lagergestells;

Figur 7 eine perspektivische Ansicht des Lagergestells gemäß Fig. 6 in einer weiteren Gebrauchslage;

Figur 8 eine schematische Seitenansicht eines weiteren Ausführungsbeispiels eines Lagergestells;

Figur 9 eine perspektivische Ansicht eines Ausführungsbeispiels einer erfindungsgemäßen Entladeeinrichtung.

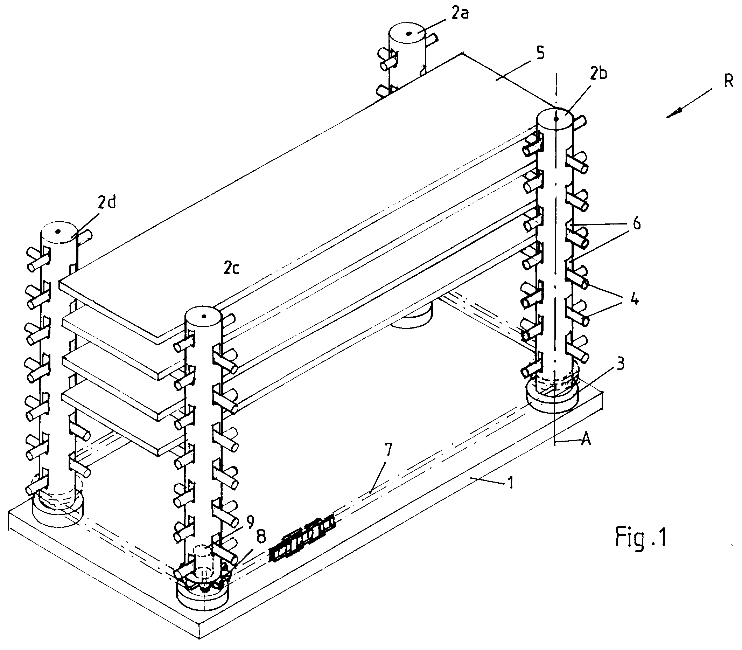

Ein erfindungsgemäßes Lagergestellt R weist gemäß Figur 1 eine Grundplatte 1 auf, auf welcher vier Stapelsäulen 2a, 2b, 2c und 2d angeordnet sind. Jede Stapelsäule 2 ist um ihre Längsachse A drehbar, wobei jede Stapelsäule 2 in einem entsprechenden Drehlager 3 auf der Grundplatte 1 sitzt. Das Drehlager 3 ist nur beispielhaft genannt, wesentlich ist allein, daß die Stapelsäule 2 um die Längsachse A drehbar ist.

Der Stapelsäule 2 sind eine Mehrzahl von Auflagern 4 zugeordnet, welche in Gebrauchslage der Halterung eines Werkstückes 5 dienen. Dieses Auflager 4 kann eine feststehende Anformung an eine Stapelsäule 2 sein. Gedacht ist auch an einen einfachen Bolzen, der in die Stapelsäule 2 eingesetzt ist. Bevorzugt wird allerdings ein Auflager 4, das in der Stapelsäule 2 kippbar gelagert ist, weshalb die Stapelsäule 2 eine entsprechende Ausnehmung 6 aufweist.

Im gezeigten Ausführungsbeispiel sind vier vertikale Reihen von Auflagern 4 jeweils in einem horizontalen Winkel um 90° zueinander versetzt angeordnet. Dabei befindet sich jedes Auflager 4 der einen vertikalen Reihe in einer Höhe von etwa der Hälfte einer Distanz zwischen zwei Auflagern einer benachbarten vertikalen Reihe. Es versteht sich von selbst und soll vom Erfindungsgedanken auch umfaßt sein, daß nur zwei oder aber auch mehr als vier derartige vertikale Reihen vorgesehen sein können. Auch der vertikale und horizontale Versatz der Auflager zueinander kann unterschiedlich ausgestaltet sein.

Das Drehen der Stapelsäule 2 wird über einen Antrieb bewirkt, wobei denkbar ist, daß jede Stapelsäule 2 einen eigenen Antrieb aufweist. Im bevorzugten Ausführungsbeispiel, sollen die Stapelsäulen 2 jedoch über entsprechende Kupplungselemente miteinander verbunden sein, so daß ein Antrieb genügt, um alle Stapelsäulen 2 in eine Drehung um die Längsachse A zu versetzen.

Gemäß Figur 1 ist dieses Kupplungselement eine Kette 7, welche als Endloskette über Zahnräder 8 gelegt ist. Jedes Zahnrad 8 ist bevorzugt drehfest mit einer Stapelsäule 2 verbunden. Es genügt nur ein beispielsweise in der Stapelsäule 2c angeordneter Motor 9, damit die Stapelsäule 2c in Drehung versetzt wird. Selbstverständlich kann dieser Motor 9 auch in der Grundplatte 1 vorgesehen sein; denkbar ist ferner auch, daß der Motor 9 zwischen zwei Stapelsäulen 2 auf der Grundplatte 1 aufsitzt und eine entsprechende Verbindung zur Kette 7 aufweist.

Falls eine kontinuierliche Drehbewegung der Stapelsäulen 2 gewünscht ist, dreht der Motor kontinuierlich; falls eine getaktete Hin- und Herbewegung der Stapelsäulen 2 um ihre jeweilige Längsachse A gewünscht ist, wird ein entsprechend getakteter Motor verwendet.

Die Funktionsweise der vorliegenden Erfindung ist die folgende:

Beispielsweise aus einer Presse wird ein entsprechendes Werkstück 5, beispielsweise ein Automobilteil, entnommen. Dieses Werkstück 5 wird in das Lagergestell R eingebracht, so daß es auf den obersten Auflagern 4 aufliegt.

Während jetzt von einem Roboter ein nächstes Werkstück 5 aus der Presse geholt wird, erfolgt eine Drehbewegung der Stapelsäule 2, wobei die Auflager unter dem Werkstück nach außen geführt werden, bis das Werkstück 5 freigegeben ist. In dem Augenblick, wenn das Werkstück 5 von den Auflagern 4 freigegeben ist, befinden sich bereits die Auflager der benachbarten vertikalen Reihe unter dem Werkstück 5, so daß das Werkstück 5 auf dieses Auflager fällt. Dabei handelt es sich aber um die zweitoberste Auflager, so daß wieder oberste Auflager zur Aufnahme eines weiteren Werkstückes bereit ist.

Auf diese Weise fällt bei jeder Drehbewegung der Stapelsäulen 2 um nicht ganz 90° das Werkstück 4 immer eine Stufe tiefer; dies gilt auch, wenn bereits mehrere Werkstücke in dem Lagergestell R vorhanden sind. Sämtliche Werkstücke fallen bei der Drehung der Stapelsäule stufenweise nach unten. Der gleiche Effekt wird auch erzielt, wenn die Stapelsäule 2 nicht kontinuierlich um die Längsachse A dreht, sondern sich jeweils im Rahmen von etwa 90° getaktet in eine Richtung oder hin- und herbewegt.

Es versteht sich von selbst, daß die Auflager 4, auf welche die Werkstücke 5 stufenweise fallen, entsprechend abgepolstert sind. Ferner können die Auflager mit Rollen oder Kugeln bestückt sein, so daß keine Beschädigung der Werkstücke erfolgt. Hier ist dem erfinderischen Gedanken kein Ziel gesetzt.

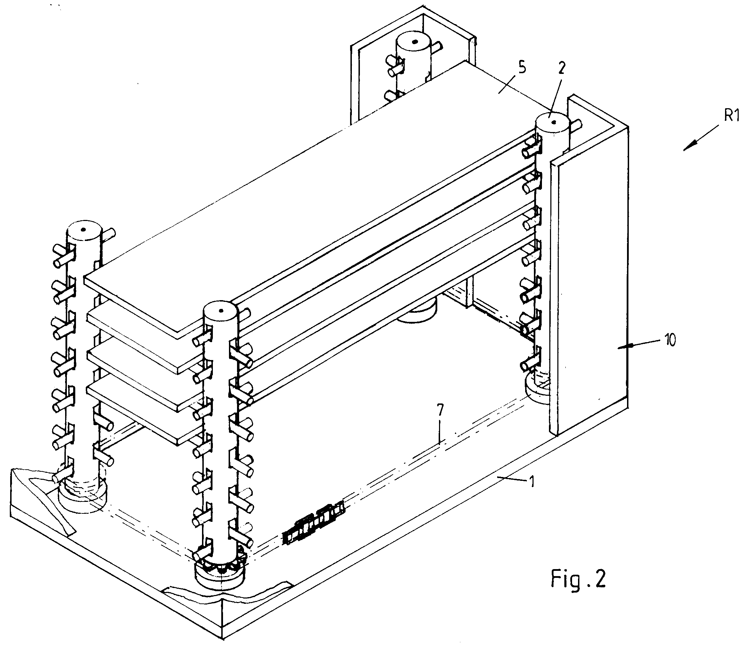

Das Ausführungsbeispiel eines Lagersgestells R1 gemäß Figur 2 unterscheidet sich dadurch, daß jeder Stapelsäule 2 ein Schutzprofil 10 zugeordnet ist. Dieses Schutzprofil 10 ist näher in dem Gebrauchsmuster 92 03 901.4 beschrieben, wobei der Inhalt dieses Gebrauchsmusters bezüglich der Schutzprofile 10 auch zum Gegenstand des vorliegenden Schutzrechts gemacht wird.

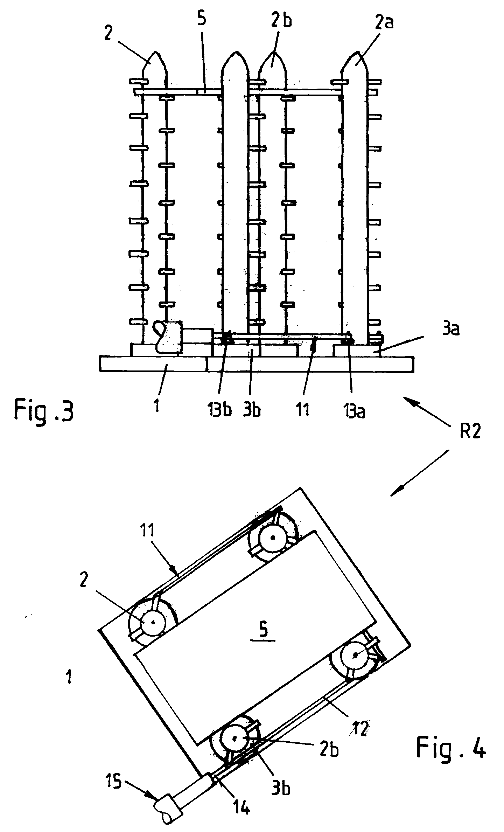

In den Figuren 3 und 4 ist ein Ausführungsbeispiel eines Lagergestells R2 gezeigt, bei welchem die Stapelsäulen 2 nicht über eine Kette, sondern über ein Gestänge 11 verbunden sind. Hierbei sind benachbarte Stapelsäulen 2 jeweils über eine exzentrisch gelagerte Verbindungsstange 12 miteinander gekoppelt, wobei die Verbindungsstange 12 über entsprechende Drehgelenke 13a und 13b exzentrisch mit jeweils einem Drehlager 3a und 3b einer Stapelsäule 2a bzw. 2b verbunden ist.

Ein Drehlager 3b, beispielsweise der Stapelsäule 2b, wird von einer Kolbenstange 14 eines Antriebes, beispielsweise eines Hydraulikzylinders 15, angegriffen und in Drehbewegung versetzt. Die Drehbewegung wird über die Verbindungsstange 12 auf das Drehlager 3 der benachbarten Stapelsäule übertragen. Da es sich hierbei um eine hin- und hergehende Drehbewegung handelt, genügen zwei Vertikalreihen von Auflagern.

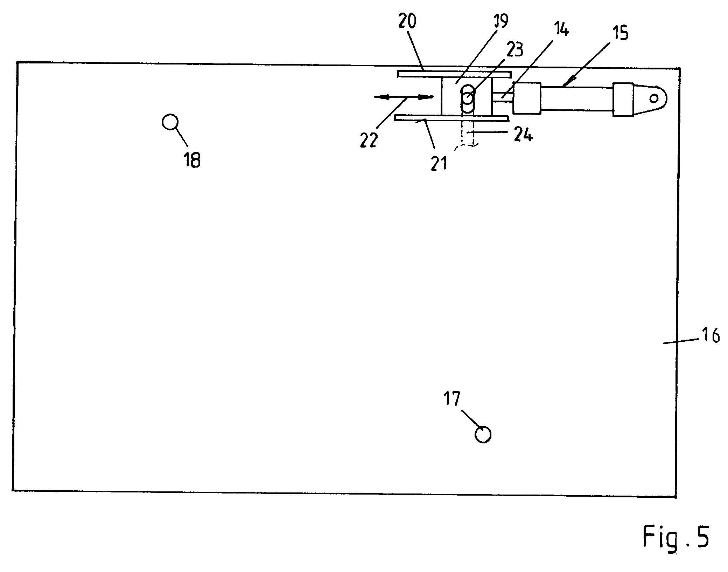

Eine Vielzahl von Anwender derartiger Lagergestelle benützen eine Zentrierplatte 16 entsprechend Figur 5 zum Zentrieren des Lagergestells im Verhältnis zu einem Roboter, einer Presse od. dgl.. Diese Zentrierplatte 16 bleibt immer ortsfest, während das Lagergestell, sobald es gefüllt ist, transportiert wird. Damit das Lagergestell wieder gegenüber einer Presse bzw. einem Roboter eine gewünschte Position einnehmen kann, befinden sich auf der Zentrierplatte 16 Zentrierstifte 17 und 18, welche mit entsprechenden Ausnehmungen in dem Lagergestell zusammenwirken.

5

Gemäß der vorliegenden Erfindung kann nun ein Antrieb auch auf dieser Zentrierplatte 16 vorgesehen sein, so daß dieser Antrieb für eine Vielzahl von Lagergestellen Anwendung finden kann. Im vorliegenden Ausführungsbeispiel handelt es sich bei dem Antrieb wiederum um den bereits in Figur 4 erwähnten Hydraulikzylinder 15, der mit seiner Kolbenstange 14 einen Schieber 19 angreift. Der Schieber 19 ist in Schienen 20 und 21 geführt, wobei der Schieber 19 in Richtung des Doppelpfeiles 22 bewegt werden kann.

Der Schieber 19 besitzt eine Aufnahme 23, in welche ein Hebel 24 eingesetzt werden kann, der in Figur 5 nur gestrichelt dargestellt ist. Der Hebel 24 ist fest mit einem Drehlager 3 verbunden. Um eine Verbindung zwischen dem Hebel 24 und dem Schieber 19 zu ermöglichen, ist die Aufnahme 23 als ein Langloch ausgebildet.

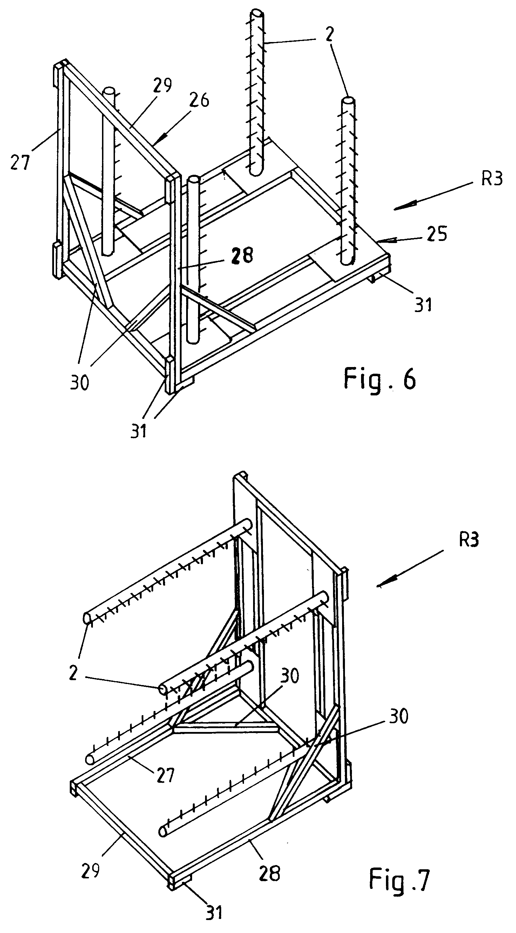

In dem weiteren Ausführungsbeispiel eines Lagergestells gem. den Figuren 6 und 7 ist die Grundplatte durch einen Grundrahmen 25 ersetzt. In den Eckbereichen dieses Grundrahmens 25 sitzen die Stapelsäulen 2 und sind dort entsprechend drehbar gelagert. An den Grundrahmen 25 schließt ein Stützrahmen 26 an und zwar in einem Winkel von etwa 90°. Dieser Stützrahmen 26 besteht im wesentlichen aus Seitenpfosten 27 und 28 sowie einem diese verbindenden Querbalken 29 und ist über Querstreben 30 gegen den Grundrahmen 25 abgestützt. Beide Rahmen 25 und 26 weisen Füße 31 auf.

Die in Figur 6 gezeigte Gebrauchslage des Lagergestells R3 ist zum beladen mit Werkstücken geeignet. Nach dem Beladen wird das Lagergestell R3 um 90° gedreht und so transportiert und abgestellt. Die Werkstücke befinden sich in vertikaler Position, die Auflager sind vorzugsweise gesperrt. Aus dieser Position können die Werkstücke entnommen werden.

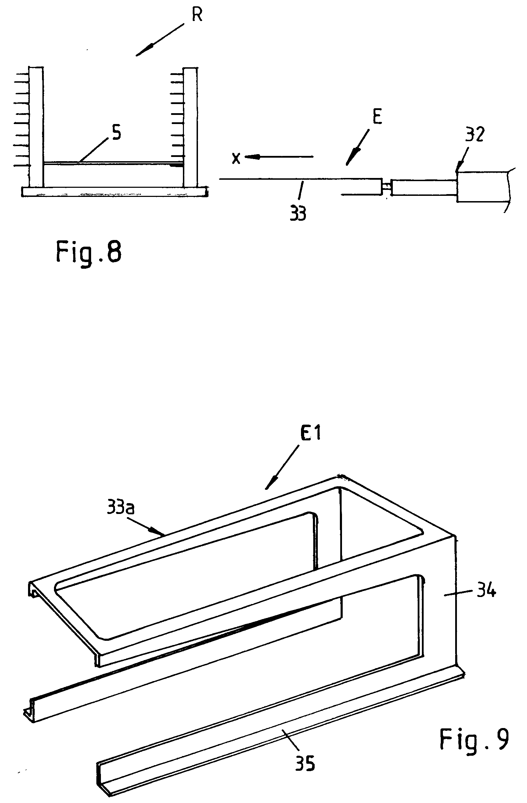

Gemäß Figur 8 ist erfindungsgemäß einem Lagergestell R eine Entladeeinrichtung E zugeordnet. Diese Entladeeinrichtung E ist in Richtung x verschiebbar, wobei sie zwischen die Stapelsäulen 2 eingreifen kann. Die Verschiebung in Richtung x wird durch einen beliebigen Antrieb 32 bewirkt. Dieser kann beispielsweise ein Hydraulik oder Pneumatikzylinder oder ein elektrischer Antrieb sein.

Wird die Entladeeinrichtung E mittels des Antriebs 32 zwischen die Stapelsäulen 2 in Richtung x gefahren, so untergreift in Gebrauchslage eine Ablage 33 das unterste Werkstück 5. Dieses liegt auf den untersten Auflagern 4. Erfolgt nun eine weitere Drehung der Stapelsäulen 2, so fällt das unterste Werkstück 5 auf die Ablage 33. Wird die Entladeeinrichtung E dann mittels des Antriebs 32 entgegen der Richtung x aus dem Lagergestellt R geführt, so bleibt das Werkstück 5 auf der Ablage 33 liegen und fährt ebenfalls aus dem Lagergestell R. Es kann nun von Bedienpersonen leicht von der Ablage genommen und seinem weiteren Verwendungszweck zugeführt werden.

Ein Beispiel einer Entladeeinrichtung E ist in Figur 9 gezeigt. Der Einfachheit halber besteht hier die Ablage 33a aus einem Rahmen, welcher über Streifen 34 mit Schienen 35 verbunden ist. Die Schienen 35 sind hier winkelförmig ausgebildet, so daß sie in entsprechend geformten Führungsrinnen leicht geführt werden können. Es ist auch möglich, daß diese Schienen 35 auf oder in der Zentrierplatte 16 zusätzlich geführt werden. Dies ist jedoch nur ein Ausführungsbeispiel einer Entladeeinrichtung E1. Es sind viele Möglichkeiten denkbar, die von der vorliegenden Erfindung umfaßt werden sollen.

| P O S I T I O N S Z A H L E N L I S T E | | | | | |
|---|---|---|---|---|---|
| 1 | Grundplatte | 34 | Streifen | A | Längsachse |
| 2 | Stapelsäule | 35 | Schienen | | |
| 3 | Drehlager | 36 | | | |
| 4 | Auflager | 37 | | | |
| 5 | Werkstück | 38 | | | |
| 6 | Ausnehmung | 39 | | E | Entladeeinheit |
| 7 | Kette | 40 | | | |
| 8 | Zahnrad | 41 | | | |
| 9 | Motor | 42 | | | |
| 10 | Schutzprofil | 43 | | | |
| 11 | Gestänge | 44 | | | |
| 12 | Verbindungsstange | 45 | | | |
| 13 | Drehgelenk | 46 | | x | Verschiebricht. |
| 14 | Kolbenstange | 47 | | | |
| 15 | Hydraulikzylinder | 48 | | | |
| 16 | Zentrierplatte | 49 | | | |
| 17 | Zentrierstift | 50 | | | |
| 18 | " | 51 | | | |
| 19 | Schieber | 52 | | | |
| 20 | Schiene | 53 | | | |
| 21 | " | 54 | | | |
| 22 | Doppelpfeil | 55 | | | |
| 23 | Aufnahme | 56 | | | |
| 24 | Hebel | 57 | | R | Lagergestell |
| 25 | Grundrahmen | 58 | | | |
| 26 | Stützrahmen | 59 | | | |
| 27 | Seitenpfosten | 60 | | | |
| 28 | " | 61 | | | |
| 29 | Querbalken | 62 | | | |
| 30 | Querstreben | 63 | | | |
| 31 | Fuß | 64 | | | |
| 32 | Antrieb | 65 | | | |
| 33 | Ablage | 66 | | | |

**Patentansprüche**

1. Lagergestell zur Aufnahme von Werkstücken (5) mit im Abstand zueinander angeordneten Stapelsäulen (2), welche Auflager (4) zum Halten der Werkstücke (5) aufweisen,
   dadurch gekennzeichnet,
   daß die Stapelsäulen (2) um ihre Längsachsen (A) drehbar angeordnet sind.

7

**2.** Lagergestell nach Anspruch 1, dadurch gekennzeichnet, daß die Auflager (4) an jeder Stapelsäule (2) in vertikaler und horizontaler Richtung versetzt zueinander angeordnet sind.

**3.** Lagergestell nach Anspruch 2, dadurch gekennzeichnet, daß die Auflager (4) in zumindest zwei vertikalen Reihen an den Stapelsäulen (2) angeordnet sind.

**4.** Lagergestell nach Anspruch 3, dadurch gekennzeichnet, daß die beiden vertikalen Reihen von Auflager (4) in einem horizontalen Winkel von etwa 90° zueinander versetzt angeordnet sind.

**5.** Lagergestell nach wenigstens einem der Ansprüche 1 bis 4, dadurch gekennzeichnet, daß die Auflager (4) feststehend der Stapelsäule (2) angeformt oder mit ihr verbunden sind.

**6.** Lagergestell nach wenigstens einem der Ansprüche 1 bis 4, dadurch gekennzeichnet, daß die Auflager (4) von einer horizontalen Haltelage in eine etwa vertikale Lage kippbar mit der Stapelsäule (2) verbunden sind.

**7.** Lagergestell nach wenigstens einem der Ansprüche 1 bis 6, dadurch gekennzeichnet, daß die Auflager (4) von einem Polster belegt und/oder mit einem Überzug versehen sind.

**8.** Lagergestell nach wenigstens einem der Ansprüche 1 bis 7, dadurch gekennzeichnet, daß sich in oder an den Auflagern (4) Rollen, Kugeln od. dgl. befinden, auf welche sich die Werkstücke (5) abstützen.

**9.** Lagergestell nach wenigstens einem der Ansprüche 1 bis 8, dadurch gekennzeichnet, daß die Auflager (4) schraubenförmig an der Stapelsäule (2) angeordnet sind.

**10.** Lagergestell nach wenigstens einem der Ansprüche 1 bis 9, dadurch gekennzeichnet, daß die Stapelsäule (2) von einem Schutzprofil (10) umgeben ist.

**11.** Lagergestell nach wenigstens einem der Ansprüche 1 bis 10, dadurch gekennzeichent, daß zumindest einer Stapelsäule (2) ein Antrieb (9, 15) zugeordnet ist, welcher die Stapelsäule (2) um die Längsachse (A) dreht.

**12.** Lagergestell nach Anspruch 11, dadurch gekennzeichnet, daß der Antrieb (9, 15) ein umlaufender oder getakteter Motor (9) ist.

**13.** Lagergestell nach Anspruch 11, dadurch gekennzeichnet, daß der Antrieb (9) ein getakteter Motor mit Vor- und Rücklauf ist.

**14.** Lagergestell nach Anspruch 11, dadurch gekennzeichnet, daß der Antrieb eine hydraulisch oder pneumatisch betriebene Kolben-Zylindereinheit (15) ist, deren Kolbenstange (14) mit einer Stapelsäule (2) verbunden ist.

**15.** Lagergestell nach wenigstens einem der Ansprüche 1 bis 14, dadurch gekennzeichnet, daß die Stapelsäulen (2) über Kupplungselemente (7, 12) miteinander in Verbindung stehen.

**16.** Lagergestell nach Anspruch 15, dadurch gekennzeichnet, daß das Kupplungselement eine Kette (7) ist, welche ein mit der jeweiligen Stapelsäule (2) verbundenes Zahnrad (8) teilweise umschlingt.

**17.** Lagergestell nach Anspruch 15, dadurch gekennzeichnet, daß das Kupplungselement ein Gestänge (11) ist, wobei zumindest eine exzentrisch und gelenkig gelagerte Verbindungsstange (12) zwei benachbarte Stapelsäulen (2) miteinander verbindet.

**18.** Lagergestell nach wenigstens einem der Ansprüche 1 bis 17, dadurch gekennzeichnet, daß die Stapelsäulen (2) auf einer Grundplatte (1), einem Grundrahmen (25) od.dgl. aufsitzen.

**19.** Lagergestell nach Anspruch 18, dadurch gekennzeichnet, daß der Grundplatte (1), dem Grundrahmen (25) od.dgl. eine Zentrierplatte (16) zugeordnet ist, auf welcher sich ein Antrieb (15) für die Drehung der Stapelsäule (2) befindet.

**20.** Lagergestell nach Anspruch 19, dadurch gekennzeichnet, daß sich auf der Zentrierplatte (16) ein Schieber (19) befindet, der von der Kolbenstange (14) eines Zylinders (15) angegriffen ist und in Schienen (20, 21) gleitet.

**21.** Lagergestell nach Anspruch 20, dadurch gekennzeichnet, daß der Schieber (19) eine Aufnahme (23) für einen Hebel (24) aufweist, welcher fest mit einer Stapelsäule (2) verbunden ist.

**22.** Lagergestell nach wenigstens einem der Ansprüche 18 bis 21, dadurch gekennzeichnet, daß an den Grundrahmen (25) eine Stützrahmen (26), bevorzugt in einem Winkel von 90°, anschließt.

**23.** Lagergestell nach Anspruch 22, dadurch gekennzeichnet, daß Grundrahmen (25) und Stützrahmen (26) von Füßen (31) unterlegt sind.

**24.** Lagergestell nach wenigstens einem der Ansprüche 1 bis 23, dadurch gekennzeichnet, daß den Stapelsäulen (2) eine Entladeeinrichtung (E) zugeordnet ist.

**25.** Lagergestell nach Anspruch 24, dadurch gekennzeichnet, daß die Entladeeinrichtung (E) eine Ablage (33) aufweist, welche unter das unterste Werkstück (5) führbar ist.

**26.** Lagergestell nach Anspruch 25, dadurch gekennzeichnet, daß der Entladeeinrichtung (E) ein Antrieb (32) zugeordnet ist.

**27.** Lagergestell nach einem der Ansprüche 24 bis 26, dadurch gekennzeichent, daß die Entladeeinrichtung (E) mittels Schienen (35) geführt ist.

Fig.1

Fig.2

Fig .3

Fig . 4

Fig.5

Fig. 6

Fig.7

14

Fig.8

Fig. 9

Europäisches
Patentamt

**EUROPÄISCHER RECHERCHENBERICHT**

Nummer der Anmeldung

EP 94 10 1550

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X<br>A | NL-C-74 973 (AUGUST RÖMER)<br>* das ganze Dokument *<br>--- | 1<br>5 | B65G1/14 |
| A | DE-A-34 03 550 (ADAM OPEL AG.)<br><br>* das ganze Dokument *<br>--- | 1,13,15,<br>16,19 | |
| A | DE-A-29 37 691 (LUTHER ERICH)<br>* Seite 7, Zeile 34 - Seite 8, Zeile 6;<br>Abbildungen *<br>--- | 10 | |
| A | DE-A-38 43 283 (AUDI AG.)<br>* Ansprüche; Abbildungen *<br>----- | 1 | |

| | | | **RECHERCHIERTE SACHGEBIETE (Int.Cl.5)** |
|---|---|---|---|
| | | | B65G |

Der vorliegende Recherchenbericht wurde für alle Patentansprüche erstellt

| Recherchenort | Abschlußdatum der Recherche | Prüfer |
|---|---|---|
| DEN HAAG | 26. April 1994 | Van Rolleghem, F |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
    Dokument

EPO FORM 1503 03.82 (P04C03)